(19) Europäisches Patentamt
European Patent Office
Office européen des brevets

(11) **EP 4 692 177 A1**

(12) **EUROPEAN PATENT APPLICATION**
published in accordance with Art. 153(4) EPC

(43) Date of publication:
**11.02.2026 Bulletin 2026/07**

(21) Application number: **24779865.5**

(22) Date of filing: **21.03.2024**

(51) International Patent Classification (IPC):
***C08J 3/12*** (2006.01)

(52) Cooperative Patent Classification (CPC):
**C08J 3/12**

(86) International application number:
**PCT/JP2024/011088**

(87) International publication number:
**WO 2024/203745 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.03.2023 JP 2023047987**

(71) Applicant: **Kaneka Corporation
Osaka-shi, Osaka 5308288 (JP)**

(72) Inventor: **SONOYAMA, Arisa
Osaka 566-0072 (JP)**

(74) Representative: **Vossius & Partner
Patentanwälte Rechtsanwälte mbB
Siebertstrasse 3
81675 München (DE)**

(54) **RESIN POWDER AND METHOD FOR PRODUCING SAME**

(57)    A resin powder having a median diameter of 20 to 1000 μm includes a thermoplastic resin (A) and crosslinked resin particles (B). The crosslinked resin particles (B) includes a polyhydroxyalkanoate resin, and have a gel fraction of 50% or more and a volume mean diameter of 0.1 μm or more and 10 μm or less. The resin powder can be produced by spray drying an aqueous dispersion including the thermoplastic resin (A) and the crosslinked resin particles (B).

EP 4 692 177 A1

## Description

### Technical Field

The present invention relates to a resin powder including crosslinked resin particles and a method for producing the same.

### Background Art

It is conventionally known that the introduction of a crosslinked structure into a resin can improve properties such as hardness, heat resistance, and solvent resistance of the resin. Small-diameter resin particles made of a resin having such a crosslinked structure are used in various applications such as a thermoplastic resin modifier, a spacer, an anti-blocking agent, and a delustering agent.

Known examples of a resin material constituting such crosslinked resin particles include an acrylic resin, an acrylic-silicone resin, and polystyrene (see Patent Literature 1 and 2, for example).

In the meanwhile, waste plastics have caused an adverse impact on the global environment, for example, by affecting ecosystems, emitting hazardous gases during combustion, or generating a huge amount of combustion heat which is partially responsible for global warming. As materials that can be a solution to this problem, biodegradable plastics are under active development.

Patent Literature 3 describes that a poly(3-hydroxyalkanoate), which is a biodegradable plastic, is melted and kneaded in the presence of an organic peroxide, whereby the resin is crosslinked. However, this literature describes that the crosslinked resin produced by melting and kneading in that manner is used to make a film or a sheet, and is quite silent about production of small-diameter crosslinked resin particles.

### Citation List

### Patent Literature

PTL 1: JP 2009-56770 A
PTL2: JP 2003-82191 A
PTL3: WO 2019/022008 A

### Summary of Invention

### Technical Problem

There are no known small-diameter crosslinked resin particles made of a biodegradable plastic and having biodegradability.

The present inventors have succeeded in producing crosslinked resin particles made of a polyhydroxyalkanoate resin, which is a resin with biodegradability, in an aqueous dispersion. The crosslinked resin particles are expected to be useful as crosslinked resin particles that address the problem of plastic waste and are environmentally friendly.

However, when trying to separate the crosslinked resin particles from the aqueous dispersion, the crosslinked resin particles are fixed to each other along with evaporation of water to form a rubber-like sheet or a lump solid, and it has been difficult to separate the crosslinked resin particles in a form easy to handle.

In view of the above current situation, an object of the present invention is to provide crosslinked resin particles composed of a polyhydroxyalkanoate resin in a form having good handleability.

### Solution to Problem

As a result of intensive studies, the present inventors have found that a resin powder including crosslinked resin particles and having good handleability can be obtained by preparing an aqueous dispersion in which a thermoplastic resin is dispersed together with crosslinked resin particles made of a polyhydroxyalkanoate resin and spray drying the aqueous dispersion, and have accomplished the present invention.

That is, the present invention relates to a resin powder having a median diameter of 20 to 1000 $\mu$m, in which

the resin powder includes a thermoplastic resin (A) and crosslinked resin particles (B), and

the crosslinked resin particles (B) include a polyhydroxyalkanoate resin, and have a gel fraction of 50% or more and a volume mean diameter of 0.1 μm or more and 10 μm or less.

In addition, the present invention also relates to a method for producing the resin powder, the method including:

a step of preparing an aqueous dispersion including a thermoplastic resin (A) and crosslinked resin particles (B); and
a step of spray drying the aqueous dispersion.

**Advantageous Effects of Invention**

According to the present invention, crosslinked resin particles made of a polyhydroxyalkanoate resin can be provided in a form having good handleability.

**Description of Embodiments**

Hereinafter, an embodiment of the present invention will be described. The present invention is not limited to the embodiment described below.
A resin powder according to the present embodiment includes at least a thermoplastic resin (A) and crosslinked resin particles (B). The resin powder is in a form having a particle size in a specific range, and thus has good handleability.
The crosslinked resin particles (B) will be described first.

**<Crosslinked Resin Particles (B)>**

The crosslinked resin particles (B) are particles made using a polyhydroxyalkanoate resin as a main resin component. The polyhydroxyalkanoate resin may hereinafter be abbreviate as "PHA".

**<PHA>**

The "PHA" generically refers to a polymer containing a hydroxyalkanoic acid as a monomer unit and is generally biodegradable. The PHA is an aliphatic polyester and preferably a polyester containing no aromatic ring.
Examples of the PHA include, but are not limited to, polyglycolic acid, a poly(3-hydroxyalkanoate) resin, and a poly(4-hydroxyalkanoate) resin. One PHA may be used alone or two or more PHAs may be used in combination. The poly(3-hydroxyalkanoate) resin is preferred. The poly(3-hydroxyalkanoate) resin may hereinafter be abbreviated as "P3HA".
The P3HA is a polyhydroxyalkanoate containing 3-hydroxyalkanoic acid repeating units represented by [-CHR-$CH_2$-CO-O-] (in which R is an alkyl group represented by $C_nH_{2n+1}$ and n is an integer from 1 to 15) as essential repeating units. The P3HA preferably contains 50 mol% or more, more preferably 70 mol% or more, of the 3-hydroxyalkanoic acid repeating units in the total monomer repeating units (100 mol%).
The P3HA is not limited to a particular type and may be a homopolymer containing the above repeating units or a copolymer containing the above repeating units. An example of the copolymer is a copolymer of 3-hydroxybutyric acid (hereinafter also referred to as "3HB") and at least one monomer selected from the group consisting of 3-hydroxypropionic acid, 3-hydroxypentanoic acid, 3-hydroxyhexanoic acid, 3-hydroxyheptanoic acid, 3-hydroxyoctanoic acid, 3-hydroxynonanoic acid, 3-hydroxydecanoic acid, 3-hydroxyundecanoic acid, 3-hydroxydodecanoic acid, 3-hydroxytridecanoic acid, 3-hydroxytetradecanoic acid, 3-hydroxyhexadecanoic acid, and 3-hydroxyoctadecanoic acid. Another example of the copolymer is a copolymer of 3HB and at least one monomer selected from the group consisting of 4-hydroxybutyric acid, 4-hydroxypentanoic acid, 4-hydroxyhexanoic acid, 4-hydroxyheptanoic acid, 4-hydroxyoctanoic acid, 4-hydroxynonanoic acid, 4-hydroxydecanoic acid, 4-hydroxyundecanoic acid, 4-hydroxydodecanoic acid, 4-hydroxytridecanoic acid, 4-hydroxytetradecanoic acid, 4-hydroxyhexadecanoic acid, and 4-hydroxyoctadecanoic acid.
Specific examples of the homopolymer or the copolymer include, but are not limited to, poly(3-hydroxybutyrate) abbreviated as P3HB, poly(3-hydroxybutyrate-co-3-hydroxyhexanoate) abbreviated as P3HB3HH, and poly(3-hydroxybutyrate-co-4-hydroxybutyrate) abbreviated as P3HB4HB.
One P3HA may be used alone or two or more P3HAs may be used in combination.
The term "poly(X-co-Y)" as used herein refers to a copolymer containing X repeating units and Y repeating units, namely, a copolymer resulting from copolymerization of a monomer from which the X repeating units are derived and a monomer from which the Y repeating units are derived.
During the P3HA production, a slight amount (about less than 1 mol%) of another monomer may be copolymerized. Insofar as the other monomer has no significant impact on the physical properties of the resulting P3HA, the other monomer is considered not to have been copolymerized and the P3HA is designated by a term which does not include the name of the other monomer.

The P3HA can be microbially produced. Such a microbially produced P3HA is typically a P3HA consisting only of D- (R-) hydroxyalkanoic acid repeating units. Among microbially produced P3HAs, P3HB, P3HB3HH, and P3HB4HB are preferred since they are easy to industrially produce. P3HB3HH and P3HB4HB are more preferred.

In the case where the P3HA contains 3-hydroxybutyric acid (3HB) repeating units, it is preferable, in terms of the balance of flexibility and strength, that the proportion of the 3HB repeating units be from 60 to 99 mol%, more preferably from 61 to 97 mol%, and even more preferably from 62 to 95 mol% in the total monomer repeating units (100 mol%). When the proportion of the 3HB repeating units is 60 mol% or more, the crosslinked resin particles (B) or the resin particles before the crosslinking treatment are easy to handle. When the proportion of the 3HB repeating units is 99 mol% or less, the crosslinked resin particles (B) are likely to have sufficient flexibility. The monomer proportions in the P3HA can be measured by a method such as gas chromatography (see WO 2014/020838 A, for example). Two or more P3HAs differing in the proportion of the 3HB repeating units may be used in combination.

The microorganism for producing the P3HA is not limited to a particular type and may be any microorganism having a P3HA-producing ability. The first example of P3HB-producing bacteria is Bacillus megaterium discovered in 1925, and other known examples include naturally occurring microorganisms such as Cupriavidus necator (formerly classified as Alcaligenes eutrophus or Ralstonia eutropha) and Alcaligenes latus. These microorganisms accumulate P3HB in their cells.

Known examples of bacteria that produce copolymers of 3HB with other hydroxyalkanoates include Aeromonas caviae, which is a P3HB3HH-producing bacterium, and Alcaligenes eutrophus, which is a poly(3-hydroxybutyrate-co-4-hydroxybutyrate)-producing bacterium. In particular, in order to increase the P3HB3HH productivity, Alcaligenes eutrophus AC32 (FERM BP-6038; see T. Fukui, Y. Doi, J. Bacteriol., 179, pp. 4821-4830 (1997)) incorporating a P3HA synthase gene is preferred. Such a microorganism is cultured under suitable conditions to allow the microorganism to accumulate a P3HA in its cells, and the microbial cells accumulating the P3HA are used. Instead of the above microorganisms, a genetically modified microorganism incorporating any suitable P3HA synthesis-related gene may be used depending on the P3HA to be produced. The culture conditions including the type of the culture substrate may be optimized depending on the P3HA to be produced.

The molecular weight of the PHA is not limited to a particular range. The weight-average molecular weight of the PHA is preferably from 50,000 to 3,000,000, more preferably from 100,000 to 2,000,000, and even more preferably from 150,000 to 1,500,000. When the weight-average molecular weight is 50,000 or more, the crosslinked resin particles (B) can avoid the tendency to have low strength or the tendency to be sticky due to a low-molecular-weight component. On the other hand, when the weight-average molecular weight is 3,000,000 or less, production and handling of PHA can be facilitated. The above-mentioned values of the weight-average molecular weight are those measured before a crosslinking process of the PHA.

The weight-average molecular weight can be determined as a polystyrene-equivalent molecular weight measured by gel permeation chromatography (GPC, "High-performance liquid chromatograph 20A system" manufactured by Shimadzu Corporation) using polystyrene gels (such as "K-G 4A" and "K-806M" manufactured by Showa Denko K.K.) as columns and chloroform as a mobile phase. In this chromatography, calibration curves can be created using polystyrenes having weight-average molecular weights of 31,400, 197,000, 668,000, and 1,920,000. The columns used in the GPC may be any columns suitable for measurement of the molecular weight.

**<Gel Fraction>**

The crosslinked resin particles (B) have a crosslinked structure formed by PHA molecular chains linked to each another. Since the amount of such a crosslinked structure is above a certain level, the crosslinked resin particles (B) have a high gel fraction, in particular a gel fraction of 50% or more. By virtue of such a high gel fraction, the hardness, heat resistance, solvent resistance, and the like of the resin particles including the PHA can be improved.

The value of the gel fraction is preferably 60% or more, more preferably 70% or more, even more preferably 75% or more, and particularly preferably 80% or more. The gel fraction may be 85% or more, or 90% or more. The upper limit of the gel fraction is not limited to a particular value, and the gel fraction only needs to be 100% or less. In terms of the efficiency of production of the crosslinked resin particles (B), the gel fraction is preferably 99.5% or less and more preferably 99% or less. The gel fraction may be 98% or less, 97% or less, or 96% or less.

The gel fraction is measured as follows. The crosslinked resin particles (B) having been dried are added to chloroform to give a concentration of 0.7 wt% and dissolved at 60°C for 30 minutes to obtain a chloroform solution. Subsequently, the chloroform solution is allowed to stand at room temperature for 3 hours, after which the chloroform solution is filtered through a membrane filter having a pore diameter of 0.45 μm. The gel remaining on the filter is dried, and the total weight of the dried gel and the filter is measured. The gel fraction is calculated by the following equation.

Gel fraction = (weight of filter carrying dried gel = weight of filter alone)/weight of crosslinked resin particles used for measurement × 100 (%)

<Mean Diameter>

The crosslinked resin particles (B) have a volume mean diameter of 0. 1 to 10 $\mu$m. When having such a diameter, a resin powder having a particle diameter in a specific range according to the present embodiment can be formed, and the resin powder can be used for various applications as described later. In terms of practical occasions for use, the volume mean diameter is preferably at least 0.1 $\mu$m, more preferably at least 0.3 $\mu$m, and even more preferably at least 0.5 $\mu$m. In terms of productivity (such as the efficiency of production or crosslinking process of the PHA), the volume mean diameter is preferably up to 8 $\mu$m and more preferably up to 5 $\mu$m.

The volume mean diameter is a value measured for the crosslinked resin particles (B) dispersed in an aqueous solvent. The measurement device used can be a commonly-used measurement device, an example of which is Microtrac MT3300 EXII manufactured by Nikkiso Co., Ltd.

<Peroxide>

The crosslinked resin particles (B) are not limited to a particular way of crosslinking but are preferably particles crosslinked using a peroxide. When a peroxide is used, radicals generated by decomposition of the peroxide act on the molecules of the PHA to link the molecular chains of the PHA directly to each other, with the result that the crosslinked structure can be formed.

The peroxide may be an organic peroxide or an inorganic peroxide. An organic peroxide is preferred because this can increase the gel fraction.

In view of factors such as the heating temperature and the time in the crosslinking process, the organic peroxide used is preferably at least one selected from the group consisting of a diacyl peroxide, an alkyl peroxyester, a dialkyl peroxide, a hydroperoxide, a peroxyketal, a peroxycarbonate, and a peroxydicarbonate.

Examples of the organic peroxide include butyl peroxyneododecanoate, octanoyl peroxide, dilauroyl peroxide, succinic peroxide, a mixture of toluoyl peroxide and benzoyl peroxide, benzoyl peroxide, bis(butylperoxy)trimethylcyclohexane, butyl peroxylaurate, dimethyldi(benzoylperoxy)hexane, bis(butylperoxy)methylcyclohexane, bis(butylperoxy)cyclohexane, butyl peroxybenzoate, butyl bis(butylperoxy)valerate, dicumyl peroxide, di-t-hexyl peroxide, t-butyl peroxy-2-ethylhexanoate, t-butyl peroxyisobutyrate, t-butyl peroxypivalate, t-hexyl peroxypivalate, t-butylperoxymethyl monocarbonate, t-pentylperoxymethyl monocarbonate, t-hexylperoxymethyl monocarbonate, t-heptylperoxymethyl monocarbonate, t-octylperoxymethyl monocarbonate, 1,1,3,3-tetramethylbutylperoxymethyl monocarbonate, t-butylperoxyethyl monocarbonate, t-pentylperoxyethyl monocarbonate, t-hexylperoxyethyl monocarbonate, t-heptylperoxyethyl monocarbonate, t-octylperoxyethyl monocarbonate, 1,1,3,3-tetramethylbutylperoxyethyl monocarbonate, t-butylperoxy-n-propyl monocarbonate, t-pentylperoxy-n-propyl monocarbonate, t-hexylperoxy-n-propyl monocarbonate, t-heptylperoxy-n-propyl monocarbonate, t-octylperoxy-n-propyl monocarbonate, 1,1,3,3-tetramethylbutylperoxy-n-propyl monocarbonate, t-butylperoxyisopropyl monocarbonate, t-pentylperoxyisopropyl monocarbonate, t-hexylperoxyisopropyl monocarbonate, t-heptylperoxyisopropyl monocarbonate, t-octylperoxyisopropyl monocarbonate, 1,1,3,3-tetramethylbutylperoxyisopropyl monocarbonate, t-butylperoxy-n-butyl monocarbonate, t-pentylperoxy-n-butyl monocarbonate, t-hexylperoxy-n-butyl monocarbonate, t-heptylperoxy-n-butyl monocarbonate, t-octylperoxy-n-butyl monocarbonate, 1,1,3,3-tetramethylbutylperoxy-n-butyl monocarbonate, t-butylperoxyisobutyl monocarbonate, t-pentylperoxyisobutyl monocarbonate, t-hexylperoxyisobutyl monocarbonate, t-heptylperoxyisobutyl monocarbonate, t-octylperoxyisobutyl monocarbonate, 1,1,3,3-tetramethylbutylperoxyisobutyl monocarbonate, t-butylperoxy-sec-butyl monocarbonate, t-pentylperoxysec-butyl monocarbonate, t-hexylperoxy-sec-butyl monocarbonate, t-heptylperoxy-sec-butyl monocarbonate, t-octylperoxy-sec-butyl monocarbonate, 1,1,3,3-tetramethylbutylperoxy-sec-butyl monocarbonate, t-butylperoxy-t-butyl monocarbonate, t-pentylperoxy-t-butyl monocarbonate, t-hexylperoxy-t-butyl monocarbonate, t-heptylperoxy-t-butyl monocarbonate, t-octylperoxy-t-butyl monocarbonate, 1,1,3,3-tetramethylbutylperoxy-t-butyl monocarbonate, t-butylperoxy-2-ethylhexyl monocarbonate, t-pentylperoxy-2-ethylhexyl monocarbonate, t-hexylperoxy-2-ethylhexyl monocarbonate, t-heptylperoxy-2-ethylhexyl monocarbonate, t-octylperoxy-2-ethylhexyl monocarbonate, 1,1,3,3-tetramethylbutylperoxy-2-ethylhexyl monocarbonate, diisobutyl peroxide, cumyl peroxyneodecanoate, di-n-propyl peroxydicarbonate, diisopropyl peroxydicarbonate, di-sec-butyl peroxydicarbonate, 1,1,3,3-tetramethylbutyl peroxyneodecanoate, bis(4-t-butylcyclohexyl) peroxydicarbonate, bis(2-ethylhexyl) peroxydicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-bis(2-ethylhexanoylperoxy)hexane, t-hexyl peroxy-2-ethylhexanoate, di(4-methylbenzoyl) peroxide, dibenzoyl peroxide, t-butylperoxy-2-ethylhexyl carbonate, t-butylperoxyisopropyl carbonate, 1,6-bis(t-butylperoxycarbonyloxy)hexane, t-butyl peroxy-3,5,5-trimethylhexanoate, t-butyl peroxyacetate, t-butyl peroxybenzoate, t-amyl peroxy-3,5,5-trimethylhexanoate, 2,2-bis(4,4-di-t-butylperoxycyclohexyl)propane, and 2,2-di-t-butylperoxybutane. One organic peroxide may be used alone, or two or more organic peroxides may be used in combination.

Among the organic peroxides as listed above, t-butylperoxyisopropyl monocarbonate, t-pentylperoxyisopropyl monocarbonate, t-hexylperoxyisopropyl monocarbonate, t-butylperoxy-2-ethylhexyl monocarbonate, t-pentylperoxy-2-ethylhexyl monocarbonate, t-hexylperoxy-2-ethylhexyl monocarbonate, t-amylperoxyisopropyl monocarbonate, di-t-hexyl peroxide, t-butyl peroxy-2-ethylhexanoate, t-butyl peroxyisobutyrate, t-hexyl peroxy-2-ethylhexanoate, 1,1,3,3-tetramethylbutyl peroxy-2-ethylhexanoate, t-butyl peroxypivalate, t-hexyl peroxypivalate, t-butyl peroxyneodecanoate, t-hexyl peroxyneodecanoate, and 1,1,3,3-tetramethylbutyl peroxyneodecanoate are preferred since the use of these organic peroxides allows for efficient crosslinking of the PHA.

The peroxide is preferably a compound having a one-hour half-life temperature of 200°C or lower because the heating temperature can be set low in the crosslinking process. The one-hour half-life temperature is more preferably 170°C or lower and even more preferably 140°C or lower. The one-hour half-life temperature may be at least 50°C, at least 60°C, or at least 70°C.

Particularly preferred examples of the organic peroxide having such a one-hour half-life temperature include t-butylperoxyisopropyl monocarbonate, t-butylperoxy-2-ethylhexyl monocarbonate, di-sec-butyl peroxydicarbonate, t-butyl peroxy-2-ethylhexanoate, t-butyl peroxyisobutyrate, t-hexyl peroxy-2-ethylhexanoate, 1,1,3,3-tetramethylbutyl peroxy-2-ethylhexanoate, t-butyl peroxypivalate, t-hexyl peroxypivalate, t-butyl peroxyneodecanoate, t-hexyl peroxyneodecanoate, and 1,1,3,3-tetramethylbutyl peroxyneodecanoate.

When the peroxide is an inorganic peroxide, examples of the inorganic peroxide include hydrogen peroxide, potassium peroxide, calcium peroxide, sodium peroxide, magnesium peroxide, potassium persulfate, sodium persulfate, and ammonium persulfate, which are preferred in view of the heating temperature and the time in the crosslinking process. Among these peroxides, hydrogen peroxide, potassium persulfate, sodium persulfate, and ammonium persulfate are preferred because they are easy to handle and have a decomposition temperature suitable for the heating temperature in the crosslinking process. One inorganic peroxide may be used alone, or two or more inorganic peroxides may be used in combination. Alternatively, an organic peroxide and an inorganic peroxide may be used in combination.

**<Polyfunctional Compound>**

The crosslinked structure of the crosslinked resin particles (B) may be introduced using only a peroxide or using both a peroxide and a polyfunctional compound. With the use of both a peroxide and a polyfunctional compound, the gel fraction of the crosslinked resin particles (B) can be increased with a reduced amount of the peroxide.

The polyfunctional compound refers to a compound having in the molecule two or more functional groups able to crosslink the PHA. The polyfunctional compound is not limited to a particular type but preferably a compound reactive with radicals generated from the peroxide and particularly preferably a compound having two or more radical-reactive groups in the molecule. The radical-reactive groups preferably include at least one functional group selected from the group consisting of vinyl, allyl, acryloyl, and methacryloyl groups.

Examples of the polyfunctional compound include, but are not limited to: allyl (meth)acrylate; allyl alkyl (meth)acrylates; allyloxy alkyl (meth)acrylates; polyfunctional (meth)acrylates having two or more (meth)acrylic groups, such as ethylene glycol di(meth)acrylate, butanediol di(meth)acrylate, triethylene glycol di(meth)acrylate, tetraethylene glycol di(meth)acrylate, polyethylene glycol di(meth)acrylate, trimethylolpropane tri(meth)acrylate, and pentaerythritol (meth)acrylate; divinylbenzene; diallyl phthalate; triallyl cyanurate; triallyl isocyanurate; and divinylbenzene. Preferred are allyl methacrylate, triallyl isocyanurate, butanediol di(meth)acrylate, and divinylbenzene. Particularly preferred are allyl methacrylate and triallyl isocyanurate.

When the crosslinked structure is formed in the presence of a polyfunctional compound, the resulting crosslinked resin particles (B) can usually contain a structure derived from the polyfunctional compound. In this case, the molecular chains of the PHA are linked to each other via the structure derived from the polyfunctional compound.

The crosslinked resin particles (B) may consist only of the PHA having a crosslinked structure or may further contain components other than the PHA having a crosslinked structure. Examples of the components other than the PHA having a crosslinked structure include a resin other than the PHA, an antioxidant, a hydrolysis inhibitor, an anti-blocking agent, a nucleating agent, and an ultraviolet absorber.

The proportion of the PHA in the crosslinked resin particles (B) is not limited to a particular range and may be 50 wt% or more. The proportion of the PHA is preferably 70 wt% or more, more preferably 80 wt% or more, still even more preferably 90 wt% or more, and particularly preferably 95 wt% or more. The proportion of the PHA may be 99 wt% or more. The upper limit of the proportion of the PHA is not limited to a particular value and may be any value of 100 wt% or less.

Examples of the resin other than the PHA include: polycaprolactone (PCL); polylactic acid (PLA); an aliphatic polyester having a structure resulting from polycondensation of an aliphatic diol and an aliphatic dicarboxylic acid; and an aliphatic-aromatic polyester formed using both an aliphatic compound and an aromatic compound as monomers. Examples of the aliphatic polyester include polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the aliphatic-aromatic polyester include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST). One of the other resins as mentioned above may be used alone, or two or more thereof may be used in combination.

The crosslinked resin particles (B) are preferably unfoamed particles unlike foamed resin particles as disclosed in WO 2007/049694 A or WO 2019/146555 A. That is, the crosslinked resin particles (B) are preferably substantially free of internal bubbles.

When the crosslinked resin particles (B) are unfoamed particles, the crosslinked resin particles (B) have a relatively high apparent density. The apparent density is preferably more than 0.6 g/cm$^3$, more preferably 0.7 g/cm$^3$ or more, and even more preferably 0.9 g/cm$^3$ or more. The apparent density of the crosslinked resin particles (B) can be determined by a method as described in JIS K 0061 (Test methods for density and relative density of chemical products) or a method as described in JIS Z 8807 (Methods of measuring density and specific gravity of solid).

The average weight per particle of the crosslinked resin particles (B) is not limited to a particular range. Since the crosslinked resin particles (B) are small-diameter particles having a volume mean diameter of 10 μm or less, the average weight per particle is much smaller than 0.1 mg.

**<Method for Producing Crosslinked Resin Particles (B)>**

One exemplary method for producing the crosslinked resin particles (B) will be described in detail. The crosslinked resin particles (B) can be produced by crosslinking a PHA in the presence of a peroxide in an aqueous dispersion containing particles of the uncrosslinked PHA. To efficiently crosslink the PHA, the aqueous PHA particle dispersion containing the peroxide is preferably heated to a temperature suitable for decomposition of the peroxide.

More specifically, the method for producing the crosslinked resin particles (B) preferably includes the steps of: (1) preparing an aqueous PHA particle dispersion containing uncrosslinked PHA particles dispersed in water; (2) adding a peroxide to the aqueous PHA particle dispersion to impregnate the PHA particles with the peroxide; and (3) heating the aqueous dispersion of the peroxide-impregnated PHA particles to a heating temperature to crosslink the PHA. More preferably, the method further includes the step (4) of maintaining the heating temperature after adding all of the peroxide.

In the step (1), the aqueous PHA particle dispersion may be an aqueous dispersion obtained by culturing a PHA-producing microorganism to accumulate a PHA in the microbial cells, then disrupting the microbial cells in the culture fluid, and separating and removing the cellular components. The aqueous dispersion thus obtained may be concentrated or diluted, and the concentrated or diluted dispersion may be used as the aqueous PHA particle dispersion. When the aqueous PHA particle dispersion is obtained in the above way, the procedures from the PHA particle preparation by culture of the PHA-producing microorganism to the crosslinking process can be carried out without separating the PHA particles from water.

Alternatively, the aqueous PHA particle dispersion can be prepared by dispersing dried PHA particles in water. The aqueous dispersion may contain, in addition to water, a water-miscible organic solvent as mentioned later.

In the aqueous dispersion, the volume mean diameter of the PHA particles is preferably in the same range as the volume mean diameter of the crosslinked resin particles (B) described above. When the PHA particles are those produced by a PHA-producing microorganism, the volume mean diameter of the PHA particles can be usually in the above-specified range; thus, an aqueous dispersion of PHA particles having a desired volume mean diameter can be obtained without the need for any special step for particle diameter adjustment.

The concentration of the PHA particles in the aqueous dispersion is not limited to a particular range and can be set as appropriate. The concentration of the PHA particles may be, for example, from about 1 to about 70 wt% and is preferably from about 5 to about 50 wt%.

The aqueous PHA particle dispersion preferably contains a dispersant to enhance the dispersibility of the PHA particles and allow the crosslinking reaction to take place uniformly. Examples of the dispersant include: anionic surfactants such as sodium dioctyl sulfosuccinate, sodium dodecyl sulfate, sodium lauryl sulfate, and sodium oleate; cationic surfactants such as lauryltrimethylammonium chloride; non-ionic surfactants such as glycerin fatty acid esters, sorbitan fatty acid esters, sucrose fatty acid esters, polyoxyethylene alkyl ethers, polyoxyethylene alkyl phenyl ethers, and polyoxyethylene polyoxypropylene glycol; and water-soluble polymers such as polyvinyl alcohol, ethylene-modified polyvinyl alcohol, polyvinylpyrrolidone, methylcellulose, ethylcellulose, hydroxymethylcellulose, hydroxyethylcellulose, polyacrylic acid, sodium polyacrylate, potassium polyacrylate, polymethacrylic acid, and sodium polymethacrylate. One of these dispersants may be used alone, or two or more thereof may be used in combination.

When a dispersant is used, the amount of the dispersant added is not limited to a particular range and may be, for example, from 0.1 to 10 parts by weight per 100 parts by weight of the PHA particles. The amount of the dispersant is preferably from 0.5 to 5 parts by weight, and particularly preferably from 0.5 to 3 parts by weight per 100 parts by weight of the PHA particles.

In the step (2), a peroxide is added to the aqueous PHA particle dispersion obtained in the step (1) to impregnate the PHA particles with the peroxide. The peroxide used can be any of those mentioned above. The peroxide added may be in any form such as a solid or liquid. The peroxide added may be a liquid diluted with a diluent or the like. The peroxide may be added all at once, or may be added continuously or in batches.

When the peroxide and the polyfunctional compound as described above are used in combination, the polyfunctional compound is preferably added to the aqueous PHA particle dispersion in the step (2). The polyfunctional compound used can be any of those mentioned above. The polyfunctional compound added may be in any form such as a solid or liquid. The peroxide added may be a liquid diluted with a diluent or the like. The polyfunctional compound may be added all at once, or may be added continuously or in batches.

The impregnation of the PHA particles with the peroxide and the optionally-used polyfunctional compound may be accomplished as follows: after or concurrently with the addition of these compounds to the aqueous PHA particle dispersion, the temperature of the aqueous dispersion is set, for example, to a temperature that is 0°C or higher but is lower than the temperature employed in the next step (3) as a temperature suitable for decomposition of the peroxide, and such a temperature of the aqueous dispersion is maintained, for example, for about 1 minute to about 5 hours with stirring of the aqueous dispersion. Specifically, the temperature of the aqueous dispersion during the impregnation may be from about 10 to about 60°C.

The amount of the peroxide used can be set as appropriate in view of the gel fraction of the crosslinked resin particles (B). For example, the amount of the peroxide is preferably from 0.01 to 10 parts by weight, more preferably from 0.1 to 8 parts by weight, even more preferably from 0.3 to 5 parts by weight, and particularly preferably from 0.5 to 3 parts by weight per 100 parts by weight of the PHA particles.

With the production method in which PHA particles are crosslinked using a peroxide in an aqueous dispersion of the PHA particles, it is easy to obtain crosslinked resin particles by allowing the crosslinking to proceed while keeping the particle diameter (volume) the same as before the crosslinking. This could be difficult to achieve by a method in which a resin is crosslinked by melting and kneading it in the presence of a peroxide.

The production method in which PHA particles are crosslinked using a peroxide in an aqueous dispersion of the PHA particles is also advantageous in that the temperature increase due to heat generated during the crosslinking reaction can be easily controlled and that crosslinked resin particles having a stable crosslinked structure (quality) can be obtained safely and efficiently.

The amount of the polyfunctional compound used may also be set as appropriate in view of the gel fraction of the crosslinked resin particles (B). For example, the amount of the polyfunctional compound is preferably from 0.01 to 20 parts by weight, more preferably from 0.05 to 15 parts by weight, even more preferably from 0.1 to 10 parts by weight, still even more preferably from 0.2 to 5 parts by weight, and particularly preferably from 0.3 to 3 parts by weight per 100 parts by weight of the PHA particles.

In the step (3), the aqueous dispersion of the peroxide-impregnated PHA particles is heated to a temperature suitable for decomposition of the peroxide. The heating temperature preferably ranges from a temperature about 25°C below the above-described one-hour half-life temperature of the peroxide to a temperature about 25°C above the one-hour half-life temperature of the peroxide. To be specific, the heating temperature is preferably from 30 to 140°C, more preferably from 50 to 135°C, and even more preferably from 60 to 130°C. With this method, the PHA can be crosslinked at a temperature lower than the melting temperature of the PHA and thus can avoid deterioration caused by heating in the crosslinking process.

In the subsequent step (4), it is preferable to maintain the above heating temperature. This allows for satisfactory completion of the peroxide-mediated crosslinking reaction. The time for which the heating temperature is maintained is not limited to a particular range but preferably from 1 minute to 15 hours and more preferably from 1 to 10 hours.

By performing the above steps (1) to (4), an aqueous dispersion of the crosslinked resin particles (B) can be obtained. The resin powder according to the present embodiment can be produced using this aqueous dispersion. Details will be described later.

### <Thermoplastic Resin (A)>

The resin powder according to the present embodiment includes a thermoplastic resin (A) in addition to the crosslinked resin particles (B). When including the thermoplastic resin (A), it is possible to form a resin powder having good handleability despite including the crosslinked resin particles (B).

The thermoplastic resin (A) is not particularly limited as long as it is a thermoplastic resin capable of constituting a resin powder together with the crosslinked resin particles (B). Examples thereof include polyolefin resins such as polyethylene and polypropylene; polyvinyl chloride; polystyrene; polyvinyl acetate; polyurethane; polytetrafluoroethylene; acrylic resins such as poly(methyl methacrylate); AS resins; polyamide; polyacetal; polycarbonate; modified polyphenylene ether; polyester resins; and cyclic polyolefin. One of these thermoplastic resins may be used alone, or two or more thereof may be used in combination.

The thermoplastic resin (A) is particularly preferably a polyester resin because a polyester resin has good compatibility with the crosslinked resin particles (B) constituted of a polyhydroxyalkanoate resin. Examples of the polyester resin include PHAs such as polyglycolic acid, poly(3-hydroxyalkanoate) resins, and poly(4-hydroxyalkanoate) resins; polylactic acid; aliphatic polyesters such as a polyester having a structure resulting from polycondensation of an aliphatic diol and an aliphatic dicarboxylic acid; and aliphatic-aromatic polyesters formed using both an aliphatic compound and an aromatic compound as monomers. Examples of the aliphatic polyesters other than PHAs include polycaprolactone, polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the aliphatic-aromatic polyesters include poly(butylene adipate-co-butylene terephthalate) (PBAT), poly(butylene sebacate-co-butylene terephthalate), poly(butylene azelate-co-butylene terephthalate), poly(butylene succinate-co-butylene terephthalate) (PBST), and polyethylene furanoate. One of these polyester resins may be used alone, or two or more thereof may be used in combination.

Since the crosslinked resin particles (B) are made with a PHA having biodegradability, the thermoplastic resin (A) preferably also includes a biodegradable resin. In this case, the biodegradability of the resin powder as a whole can be enhanced.

When the crosslinked resin particles (B) are those produced from a plant-derived raw material, it is preferable, in terms of resources recycling, that the thermoplastic resin (A) be also a resin produced from a plant-derived raw material.

When the thermoplastic resin (A) includes a biodegradable resin, the proportion of the biodegradable resin in the total thermoplastic resin (A) is preferably from 10 to 100 wt%, more preferably 30 wt% or more, even more preferably 50 wt% or more, still even more preferably 70 wt% or more, and particularly preferably 90 wt% or more.

The biodegradable resin used as the thermoplastic resin (A) preferably includes the aliphatic polyester as described above and particularly preferably includes a PHA and/or polylactic acid because such a biodegradable resin has good compatibility with the crosslinked resin particles (B) and makes it possible to easily produce a resin powder having good handleability. The PHA used as the thermoplastic resin (A) preferably has no crosslinked structure.

When the thermoplastic resin (A) includes a PHA and/or polylactic acid, the proportion of the PHA and/or polylactic acid in the total thermoplastic resin (A) is preferably from 10 to 100 wt%, more preferably 30 wt% or more, even more preferably 50 wt% or more, still even more preferably 70 wt% or more, and particularly preferably 90 wt% or more.

Examples of PHAs that can be used as the thermoplastic resin (A) include, but are not limited to, polyglycolic acid, P3HAs, and poly(4-hydroxyalkanoate) resins. One PHA may be used alone or two or more PHAs may be used in combination. P3HAs are particularly preferred.

P3HAs that can be used as the thermoplastic resin (A) include those that can be used for the crosslinked resin particles (B), and any of the various P3HAs as previously mentioned can be used as the thermoplastic resin (A). The P3HA used as the thermoplastic resin (A) is preferably different from the P3HA used for the crosslinked resin particles (B) and more preferably a resin harder than the P3HA used for the crosslinked resin particles (B).

When the P3HA used as the thermoplastic resin (A) contains 3-hydroxybutylic acid (3HB) repeating units, it is preferable, in terms of the balance of flexibility and strength, that the proportion of the 3HB repeating units be from 80 to 99 mol% and more preferably from 82 to 97 mol% in total monomer repeating units (100 mol%). When the proportion of the 3HB repeating units is 80 mol% or more, the stiffness of the P3HA can be enhanced. When the proportion of the 3HB repeating units is 99 mol% or less, the flexibility of the P3HA is likely to be enhanced. Two or more P3HAs differing in the proportion of the 3HB repeating units may be used in combination.

The molecular weight of the PHA used as the thermoplastic resin (A) is not limited to a particular range. The weight-average molecular weight of the PHA is preferably from 50,000 to 3,000,000, more preferably from 100,000 to 2,000,000, and even more preferably from 150,000 to 1,500,000. When the weight-average molecular weight is 50,000 or more, the resin powder according to the present embodiment can achieve good stiffness or strength. On the other hand, when the weight-average molecular weight is 3,000,000 or less, production and handling of PHA can be facilitated.

The polylactic acid used as the thermoplastic resin (A) can be conventionally known polylactic acid and may be either crystalline or amorphous.

The polylactic acid may be a homopolymer of lactic acid or a copolymer of lactic acid and another monomer. The polylactic acid may be a blend of the homopolymer and the copolymer.

Examples of the other monomer include aliphatic hydroxycarboxylic acids other than lactic acid, aliphatic polyhydric alcohols, aliphatic polycarboxylic acids, and polyfunctional polysaccharides.

The lactic acid raw material for producing the polylactic acid is not limited to a particular material, L-Lactic acid, D-lactic acid, DL-lactic acid, a mixture of these lactic acids, L-lactide, D-lactide, mesolactide, or a mixture of these lactides can be used. Lactic acid obtained by microbial fermentation of a plant-derived renewable raw material such as starch is suitable for use.

The production of the polylactic acid is not limited to using a particular method, and any known method such as dehydration polycondensation or ring-opening polymerization can be used.

The molecular weight of the polylactic acid used as the thermoplastic resin (A) is not limited to a particular range.

The weight-average molecular weight of the polylactic acid is preferably from 50,000 to 1,000,000, more preferably from 70,000 to 700,000, and even more preferably from 100,000 to 400,000. When the weight-average molecular weight is 50,000 or more, the resin powder according to the present embodiment can achieve good stiffness or strength. When the weight-average molecular weight is 1,000,000 or less, production and handling of the polylactic acid can be facilitated.

**<Resin Powder>**

The resin powder according to the present embodiment includes the thermoplastic resin (A) and the crosslinked resin particles (B) as described above.

In the resin powder, the proportion of the crosslinked resin particles (B) in the total amount of the thermoplastic resin (A) and the crosslinked resin particles (B) is preferably 10 wt% or more, more preferably 20 wt% or more, and still more preferably 30 wt% or more because in such a case the effect of the crosslinked resin particles (B) is easily achieved. The proportion of the crosslinked resin particles (B) may be 40 wt% or more. The upper limit of the proportion of the crosslinked resin particles (B) is preferably 90 wt% or less, more preferably 80 wt% or less, and still more preferably 70 wt% or less because the handleability of the resin powder can be further improved. The upper limit of the proportion may be 60 wt% or less.

The resin powder according to the present embodiment may be constituted of substantially only the thermoplastic resin (A) and the crosslinked resin particles (B), but one or more of a dispersant or an emulsifier, a pH adjuster, an inorganic filler, a colorant such as a pigment or a dye, an odor absorber such as activated carbon or zeolite, a fragrance such as vanillin or dextrin, a plasticizer, an antioxidant, an anti-oxidizing agent, a weather resistance improver, an ultraviolet absorber, a nucleating agent, a lubricant, a mold release agent, a water repellent, an antibacterial agent, a slidability improver, and the like may be contained as long as the effect of the invention is not impaired.

The resin powder according to the present embodiment may contain various components resulting from the process of the production method as long as the effects of the invention are not impaired.

In the resin powder according to the present embodiment, the thermoplastic resin (A) and the crosslinked resin particles (B) are main constituents. Specifically, the total proportion of the thermoplastic resin (A) and the crosslinked resin particles (B) in the entire resin powder may be usually from 60 to 100 wt%, from 80 to 100 wt%, from 90 to 100 wt%, from 95 to 100 wt%, or from 99 to 100 wt%. The upper limit may be 99.9 wt% or less, or 99 wt% or less.

In terms of improving the handleability of the resin powder, the resin powder according to the present embodiment may have a median diameter in the range of from 20 $\mu$m to 1000 $\mu$m. The lower limit of the median diameter may be 30 $\mu$m or more. The median diameter may be up to 500 $\mu$m, up to 300 $\mu$m, up to 200 $\mu$m, or up to 100 $\mu$m.

The median diameter of the resin powder is a value measured in a dry or wet manner by a laser diffraction/scattering method using, for example, LMS-3000 manufactured by Seishin Enterprise Co., Ltd. In the case of measurement in a wet manner, it is preferable to add a resin powder to an aqueous solution to which a small amount of a surfactant is added as a dispersant, and perform the measurement in a state where the resin powder is not aggregated.

The resin powder according to the present embodiment preferably has a low water content. Specifically, the water content is preferably 5 wt% or less, more preferably 3 wt% or less, and still more preferably 1 wt% or less.

**<Method for Producing Resin Powder>**

The method for producing the resin powder according to the present embodiment is not particularly limited. However, the resin powder can be suitably produced by preparing an aqueous dispersion including the thermoplastic resin (A) and the crosslinked resin particles (B) and spray drying the aqueous dispersion.

The aqueous dispersion including the thermoplastic resin (A) and the crosslinked resin particles (B) can be prepared by adding the thermoplastic resin (A) to an aqueous dispersion of the crosslinked resin particles (B). The aqueous dispersion of the crosslinked resin particles (B) can be produced as described above.

The thermoplastic resin (A) added to the aqueous dispersion of the crosslinked resin particles (B) may be in the form of a powder or an aqueous dispersion of the thermoplastic resin (A).

The thermoplastic resin (A) in the aqueous dispersion preferably has a volume mean particle diameter of from 0.1 to 10 $\mu$m. By virtue of using the thermoplastic resin (A) having such a particle diameter, a resin powder having a particle diameter in a specific range according to the present embodiment can be suitably produced. The particle diameter is preferably at least 0.1 $\mu$m, more preferably at least 0.3 $\mu$m, and even more preferably at least 0.5 $\mu$m. The particle diameter is preferably up to 8 $\mu$m, and more preferably up to 5 $\mu$m.

When a powdery thermoplastic resin (A) is added to the aqueous dispersion of the crosslinked resin particles (B), the thermoplastic resin (A) after the addition preferably has a particle diameter of from 0.1 to 10 $\mu$m as described above.

The aqueous dispersion of the thermoplastic resin (A) described above may be an emulsion. The method for the production thereof is not limited to a particular method, and for example, the emulsion may be produced by solidifying resin after melting by heat in a solvent and further, stirring together with glass beads at a high speed and then pulverizing (see, for example, paragraph[0008] of JP 9-78494 A), or may be produced by mixing and kneading melted resin and an aqueous solution of a surfactant (for example, paragraph[0006] of JP H11-92712 A and paragraph[0006] of JP 2001-354841 A), or may be produced by pulverizing frozen resin and then dispersing the pulverized resin in water.

When the thermoplastic resin (A) is PHA, the aqueous dispersion of the thermoplastic resin (A) may be an aqueous dispersion obtained by culturing a PHA-producing microorganism to accumulate a PHA in the microbial cells, then disrupting the microbial cells in the culture fluid, and separating and removing the cellular components. The aqueous dispersion thus obtained may be concentrated or diluted, and the concentrated or diluted dispersion may be used as the aqueous PHA particle dispersion.

The aqueous medium included in the aqueous dispersion including the thermoplastic resin (A) and the crosslinked resin particles (B) may consist only of water or may be a solvent mixture of water and a water-miscible organic solvent. In the solvent mixture, the concentration of the water-miscible organic solvent is not limited to a particular range and may be any value equal to or lower than the solubility in water of the organic solvent used.

The organic solvent is not limited to a particular solvent, and examples thereof include alcohols such as methanol, ethanol, 1-propanol, 2-propanol, 1-butanol, 2-butanol, isobutanol, pentanol, hexanol, and heptanol; ketones such as acetone and methyl ethyl ketone; ethers such as tetrahydrofuran and dioxane; nitriles such as acetonitrile and propionitrile; amides such as dimethylformamide and acetamide; dimethyl sulfoxide; pyridine; and piperidine. Among these, methanol, ethanol, 1-propanol, 2-propanol, 1-butanol, 2-butanol, isobutanol, acetone, methyl ethyl ketone, tetrahydrofuran, dioxane, acetonitrile, and propionitrile are preferred since they are easy to remove. Methanol, ethanol, 1-propanol, 2-propanol, butanol, and acetone are more preferred because they are easily available. Particularly preferred are methanol, ethanol, and acetone.

The proportion of water in the entire aqueous medium contained in the aqueous dispersion including the thermoplastic resin (A) and the crosslinked resin particles (B) is preferably 5 wt% or more, more preferably 10 wt% or more, still more preferably 30 wt% or more, even still more preferably 50 wt% or more, and particularly preferably 70 wt% or more. The proportion of water may be 90 wt% or more, or 95 wt% or more. The upper limit of the proportion of water is not limited to a particular value, and may be 100 wt% or less.

The total concentration of the thermoplastic resin (A) and the crosslinked resin particles (B) in the aqueous dispersion including the thermoplastic resin (A) and the crosslinked resin particles (B) is not limited to a particular range, but is preferably 20 wt% or more, more preferably 30 wt% or more, and even more preferably 40 wt% or more because, for example, it is economically advantageous in a drying utility aspect and productivity is improved. The upper limit of the total concentration is preferably 65 wt% or less and more preferably 60 wt% or less in order to secure the fluidity of the aqueous dispersion. The method for adjusting the total concentration is not limited to a particular method, and examples thereof include a method of adding an aqueous medium and a method of removing a part of the aqueous medium (for example, after centrifugation, the supernatant is removed).

The pH of the aqueous dispersion including the thermoplastic resin (A) and the crosslinked resin particles (B) is preferably adjusted to 8 or less, preferably 7 or less, and more preferably 6 or less, as necessary, for example, to suppress a decrease in the molecular weight of the resin component during spray drying and in the processing step after drying. The lower limit of the pH is preferably 1 or more, more preferably 2 or more, and still more preferably 3 or more from the viewpoint of the acid resistance of a container. The method for adjusting the pH is not limited to a particular method, and examples thereof include a method of adding an acid. The acid is not particularly limited, and may be either an organic acid or an inorganic acid. More specifically, examples of an acid that can be used include sulfuric acid, hydrochloric acid, phosphoric acid, and acetic acid.

The aqueous dispersion including the thermoplastic resin (A) and the crosslinked resin particles (B) may contain one or more of a dispersant or an emulsifier, a pH adjuster, an inorganic filler, a colorant such as a pigment or a dye, an odor absorber such as activated carbon or zeolite, a fragrance such as vanillin or dextrin, a plasticizer, an antioxidant, an anti-oxidizing agent, a weather resistance improver, an ultraviolet absorber, a nucleating agent, a lubricant, a mold release agent, a water repellent, an antibacterial agent, a slidability improver, and the like as long as the effect of the invention is not impaired.

The aqueous dispersion including the thermoplastic resin (A) and the crosslinked resin particles (B) may contain various components resulting from the process of the production method as long as the effects of the invention are not impaired.

In the aqueous dispersion including the thermoplastic resin (A) and the crosslinked resin particles (B), the thermoplastic resin (A), the crosslinked resin particles (B), and the aqueous medium are main constituents. Specifically, the total proportion of the thermoplastic resin (A) and the crosslinked resin particles (B) in the total solid content of the aqueous dispersion usually may be from 60 to 100 wt%, from 80 to 100 wt%, from 90 to 100 wt%, from 95 to 100 wt%, or from 99 to 100 wt%. The upper limit may be 99 wt% or less, or 95 wt% or less.

The resin powder according to the present embodiment can be suitably produced by spray drying the aqueous dispersion including the thermoplastic resin (A) and the crosslinked resin particles (B) described above.

Examples of the spray drying method include a method in which an aqueous dispersion is fed in the form of fine droplets into a dryer and dried while being brought into contact with hot air in the dryer. The method (atomizer) for feeding the aqueous dispersion in the form of fine droplets into the dryer is not particularly limited, and examples thereof include known methods such as a method using a rotary disk and a method using a nozzle. The type of contact between the droplets and the hot air in the dryer is not particularly limited, and examples thereof include a parallel flow type, a counterflow type, and a type combining those types.

The drying temperature at the time of spray drying may be any temperature at which most of the aqueous medium can be removed from the droplets of the aqueous dispersion. The aqueous dispersion may be dried to a target water content, which may be appropriately set under conditions such that deterioration in quality (decrease in molecular weight, deterioration in color tone, etc.), melting, and the like are not caused as much as possible. For example, the temperature of hot air blown into the spray dryer may be appropriately selected in the range of from 40 to 300°C. The amount of hot air in the dryer may also be appropriately set according to, for example, the size of the dryer.

### <Application of Resin Powder>

The application of the resin powder according to the present embodiment is not limited to a particular application, and the resin powder can be used in applications where conventionally known crosslinked resin particles are used. Specific examples thereof include, but are not limited to, a resin modifier, a rheology modifier of a paint or an adhesive, a paint pigment, a paper coating agent, a matting agent, an anti-blocking agent, an additive for cosmetics, an additive for toner, a spacer for liquid crystal, a coating agent, a filler for adhesive tape, a fiber processing agent, inspection particles for medical diagnosis, and a filler.

The resin powder according to the present embodiment may be processed into an article other than the powder. Such an article is not particularly limited, and examples thereof include granules and molded articles described later. Therefore, one aspect of the present disclosure also extends to a resin composition including a thermoplastic resin (A) and crosslinked resin particles (B), in which the crosslinked resin particles (B) includes a polyhydroxyalkanoate resin and have a gel fraction of 50% or more. The details of the thermoplastic resin (A) and the crosslinked resin particles (B) and the proportions of both the components can be according to the proceeding description.

The shape of the granules obtained by processing the resin composition according to the present disclosure is not limited to a particular shape, and may be, for example, a substantially spherical shape, a flat shape, a cubic shape, a spindle shape, a needle shape, or the like. The median diameter of the granules is not limited to a particular range, but may be, for example, about 1 mm to about 10 mm. The granules may be pellets.

In the case where the resin powder according to the present embodiment has been processed into granules, there are advantages of preventing classification when another thermoplastic resin described later is in the form of pellets and mixed with the granules, and preventing clinging to a screw in a kneading machine. Examples of the production method for processing the resin powder according to the present embodiment into granules include, but are not limited to, a method involving melting the resin powder with an extruder, extruding the melt, and cutting the extrudate with a blade.

From the resin powder according to the present embodiment, a molded article can also be produced. The molded article can be expected to improve mechanical properties such as impact resistance due to containing the crosslinked resin particles (B). The resin powder according to the present embodiment may be used alone to produce a molded article, or may be mixed with an optional additive and/or another thermoplastic resin, and then subjected to the production of a molded article. At the time of mixing the resin powder with an optional additive or another thermoplastic resin, it is preferable to obtain a thermoplastic resin composition by a melt-kneading step and then produce a molded article.

The thermoplastic resin composition can be produced by a known method. A specific example is a method in which the resin powder according to the present embodiment is melted and kneaded together with an optional additive and/or another thermoplastic resin by using a device such as an extruder, a kneader, a Banbury mixer, or a roll mill. In the melting and kneading, the components are preferably mixed with care so as to avoid a reduction in molecular weight caused by thermal decomposition. Alternatively, the thermoplastic resin composition can also be produced by dissolving the components in a soluble solvent and then removing the solvent.

As the other thermoplastic resin, the resins recited as examples for the thermoplastic resin (A) can be used. The same resin as the thermoplastic resin (A) may be used, or a resin different from the thermoplastic resin (A) may be used. As the optional additive, the resin powder according to the present embodiment may contain the additive, or the above-described additive may be used.

In the production by melting and kneading, each of the components may be individually placed into a device such as an extruder, or the components may be mixed first and then the mixture may be placed into a device such as an extruder.

When the melting and kneading are performed by an extruder, the resulting thermoplastic resin composition may be extruded into a strand, and then the strand may be cut into particles of bar shape, cylindrical shape, elliptic cylindrical shape, spherical shape, cubic shape, rectangular parallelepiped shape, or any other shape.

The resin temperature in the melting and kneading depends on the properties such as melting point and melt viscosity of the resins used and cannot be definitely specified. In terms of avoiding thermal decomposition of the thermoplastic resin (A) and the other thermoplastic resin and at the same time dispersing the crosslinked resin particles (B) uniformly, the resin temperature is preferably from 140 to 250°C, more preferably from 150 to 230°C, and even more preferably from 160 to 220°C.

The production is not limited to using a particular molding method, and a commonly used molding method can be employed. Specific examples of the molding method include blown film molding, extrusion blow molding, injection blow molding, extrusion molding, calender molding, vacuum molding, and injection molding. By these molding methods, for example, a sheet, film, blow-molded product, extrusion-molded product, vacuum-molded product, or injection-molded product can be produced.

The molded article formed from the resin powder according to the present embodiment is suitable for use in various fields such as agricultural industry, fishery industry, forestry industry, horticultural industry, medical industry, hygiene industry, food industry, apparel industry, non-apparel industry, packaging industry, automotive industry, building material industry, and other industries.

In the following items, preferred aspects of the present disclosure are listed. The present invention is not limited to the following items.

[Item 1] A resin powder having a median diameter of 20 to 1000 $\mu$m, in which

the resin powder includes a thermoplastic resin (A) and crosslinked resin particles (B), and
the crosslinked resin particles (B) include a polyhydroxyalkanoate resin, and have a gel fraction of 50% or more and a volume mean diameter of 0.1 $\mu$m or more and 10 $\mu$m or less.

[Item 2] The resin powder according to item 1, in which the proportion of the crosslinked resin particles (B) in the total amount of the thermoplastic resin (A) and the crosslinked resin particles (B) is from 10 to 90 wt%.

[Item 3] The resin powder according to item 1 or 2, in which the polyhydroxyalkanoate resin is a poly(3-hydroxyalkanoate) resin.

[Item 4] The resin powder according to any one of items 1 to 3, in which the crosslinked resin particles (B) are resin particles crosslinked using a peroxide.

[Item 5] The resin powder according to item 4, in which the crosslinked resin particles (B) are resin particles crosslinked in the presence of a polyfunctional compound additionally.

[Item 6] The resin powder according to any one of items 1 to 5, in which the proportion of the polyhydroxyalkanoate resin in the crosslinked resin particles (B) is 80 wt% or more.

[Item 7] The resin powder according to any one of items 1 to 6, in which the thermoplastic resin (A) includes a biodegradable resin.

[Item 8] The resin powder according to item 7, in which the biodegradable resin is a polyester resin.

[Item 9] A method for producing the resin powder according to any one of items 1 to 8, the method including:

a step of preparing an aqueous dispersion including a thermoplastic resin (A) and crosslinked resin particles (B); and
a step of spray drying the aqueous dispersion.

Examples

Hereinafter, the present invention will be described more specifically using examples. The present invention is not limited by the examples in any respect.

**[1] Measurement Conditions**

**1-1. Weight-average molecular weight**

The resin as a measurement object was dissolved in chloroform, and the solution was heated in a hot water bath at 60°C for 30 minutes. The heated solution was filtered through a disposable filter made of PTFE and having a pore diameter of 0.45 $\mu$m, and the filtrate was then subjected to GPC analysis under the conditions listed below to determine the weight-average molecular weight.

GPC system: High-performance liquid chromatograph 20A system manufactured by Shimadzu Corporation
Column: K-G 4A (one column) and K-806M (two columns) manufactured by Showa Denko K.K.
Sample concentration: 1 mg/ml
Eluent: Chloroform solution

Eluent flow rate: 1.0 ml/min
Amount of injected sample: 100 $\mu$L
Analysis time: 30 minutes
Standard sample: Standard polystyrene

### 1-2. Volume mean diameter

The volume mean diameter of crosslinked resin particles or uncrosslinked resin particles was measured for a latex of resin particles. The measurement device used was Microtrac MT3300 EXII manufactured by Nikkiso Co., Ltd.

### 1-3. Gel fraction

Crosslinked resin particles having been dried were added to chloroform to give a concentration of 0.7 wt% and dissolved at 60°C for 30 minutes, affording a chloroform solution. Subsequently, the chloroform solution was allowed to stand at room temperature for 3 hours, after which the chloroform solution was filtered through a membrane filter having a pore diameter of 0.45 $\mu$m. During the filtration process, chloroform was poured on the interior of the container and the filter several times to ensure sufficient washing to prevent a loss. The gel remaining on the filter was dried, and the total weight of the dried gel and the filter was measured. The gel fraction was calculated by the following equation.

Gel fraction = (weight of filter carrying dried gel - weight of filter alone)/weight of crosslinked resin particles used for measurement $\times$ 100 (%)

### [2] Raw Materials for Crosslinked Resin Particles

### 2-1. Uncrosslinked resin particles

Poly(3-hydroxybutyrate-co-3-hydroxyhexanoate), (3-hydroxybutyrate)/(3-hydroxyhexanoate) = 72/28 (mol/mol), weight-average molecular weight Mw = $50 \times 10^4$ to $150 \times 10^4$, volume mean diameter: 1.7 $\mu$m

### 2-2. Peroxide

Di-sec-butyl peroxydicarbonate ("Luperox 225" manufactured by ARKEMA Yoshitomi Ltd., one-hour half-life temperature: 69°C)

### 2-3. Polyfunctional compound

Triallyl isocyanurate

### [3] Method for Preparing Aqueous Dispersion of Crosslinked Resin Particles (B)

An autoclave equipped with a stirrer, a baffle, a nitrogen inlet/outlet, and a thermometer was charged with an aqueous dispersion containing the uncrosslinked resin particles dispersed in water (the amount of solids was 100 parts by weight), 200 parts by weight of deionized water, 2 parts by weight of peroxide, 2 parts by weight of sodium dioctyl sulfosuccinate, and 0.5 parts by weight of polyfunctional compound. Stirring of the contents of the autoclave was started at room temperature, and at the same time the interior of the autoclave was purged with nitrogen.
After that, the contents of the autoclave were stirred at room temperature for 1 hour to impregnate the uncrosslinked resin particles with the peroxide and the polyfunctional compound, and then the temperature was raised to 75°C as a reaction temperature. After the reaction temperature was reached, the reaction was allowed to proceed at the reaction temperature for 3.5 hours. Thus, an aqueous dispersion containing crosslinked resin particles (B) dispersed in water was obtained.
The volume mean diameter of the crosslinked resin particles (B) in the aqueous dispersion was measured by the above-described method and found to be 1.7 $\mu$m.
In addition, the pH of the aqueous dispersion was adjusted, and then the aqueous dispersion was dried in an oven, affording crosslinked resin particles (B) solidified. The gel fraction of the particles was measured by the above-described method and found to be 95%.

**[4] Method for Preparing Aqueous Dispersion for Drying**

(a) Aqueous dispersion of thermoplastic resin (A) (solid concentration: 50%)

Thermoplastic resin (A): Poly(3-hydroxybutyrate-co-3-hydroxyhexanoate (KANEKA Biodegradable Polymer PHBH (registered trademark) manufactured by Kaneka Corporation)), (3-hydroxybutyrate)/(3-hydroxyhexanoate) = 94.4/5.6 (mol/mol), weight-average molecular weight Mw: 530,000, volume mean diameter: 2.2 μm

Aqueous dispersion including the thermoplastic resin (A) and 1 part by weight of an ethylene oxide/propylene oxide copolymer nonionic dispersant (molecular weight of polyethylene oxide: 8000, molecular weight of polypropylene oxide: 2000, Pronon 208 manufactured by NOF Corporation) added per 100 parts by weight of the thermoplastic resin (A)

(b) Aqueous dispersion of the crosslinked resin particles (B) described above (solid concentration: 25%)

The aqueous dispersion (a) and the aqueous dispersion (b) were mixed at the ratio (on solid weight basis) shown in Table 1, the temperature was raised to about 50 to 55°C, and then the pH was adjusted to be stable at 3.8. Thus, a mixed aqueous dispersion was obtained.

[5] Spray drying method

The mixed aqueous dispersion obtained as described above was spray dried under the conditions shown in Table 1 using an L-8 spray dryer manufactured by Ohkawara Kakohki Co., Ltd., and thus a resin powder including the thermoplastic resin (A) and the crosslinked resin particles (B) was obtained.
The median diameter of the resin powder obtained by spray drying was measured in a dry manner by a laser diffraction/scattering method using LMS-3000 manufactured by Seishin Enterprise Co., Ltd. The results are shown in Table 1.

**(Oven drying method)**

When the mixed aqueous dispersion obtained as described above was placed in an oven at 55°C for 24 hours or more to sufficiently remove moisture, affording a rubber-like sheet having poor handleability.

[Table 1]

| | | Reference Example | Example 1 | Example 2 | Example 3 |
|---|---|---|---|---|---|
| Aqueous dispersion | Thermoplastic resin (A) | 100% | 70% | 50% | 30% |
| | Crosslinked resin particles (B) | - | 30% | 50% | 70% |
| Spray drying conditions | Liquid delivery amount (L/h) | 1.5 | 1.2 | 1 | 0.5 |
| | Hot air temperature (°C) | 150 | 130 | 90 | 40 |
| | Exhaust air temperature (°C) | 104 | 92 | 65 | 30 |
| | Disk rotation speed (rpm) | 25,000 | 25,000 | 25,000 | 25,000 |
| Resin powder | Water content (%) | 0.16 | 0.24 | 0.25 | 0.61 |
| | Median diameter (μm) | 70 | 40 | 40 | 40 |

From Examples 1 to 3 summarized in Table 1, it can be seen that by spray drying an aqueous dispersion including a thermoplastic resin (A) and crosslinked resin particles (B), a resin powder including the thermoplastic resin (A) and the crosslinked resin particles (B) was obtained. The resin powder obtained in each of the Examples had good handleability.
In Comparative Example 1 (not shown in the table), an attempt was made to spray dry an aqueous dispersion including only crosslinked resin particles (B), but the resin particles adhered to the wall surface inside the spray dryer while being aggregated, so that it was difficult to collect the resin particles, and it was impossible to obtain a resin powder like those obtained in the Examples. This fact shows that the crosslinked resin particles (B) have extremely high adhesive-agglomerative property, and are difficult to collect as a sole-constituent powder.

**Claims**

1. A resin powder having a median diameter of 20 to 1000 $\mu$m, wherein

   the resin powder comprises a thermoplastic resin (A) and crosslinked resin particles (B), and
   the crosslinked resin particles (B) comprise a polyhydroxyalkanoate resin, and have a gel fraction of 50% or more and a volume mean diameter of 0.1 $\mu$m or more and 10 $\mu$m or less.

2. The resin powder according to claim 1, wherein a proportion of the crosslinked resin particles (B) in a total amount of the thermoplastic resin (A) and the crosslinked resin particles (B) is from 10 to 90 wt%.

3. The resin powder according to claim 1 or 2, wherein the polyhydroxyalkanoate resin is a poly(3-hydroxyalkanoate) resin.

4. The resin powder according to claim 1 or 2, wherein the crosslinked resin particles (B) are resin particles crosslinked using a peroxide.

5. The resin powder according to claim 4, wherein the crosslinked resin particles (B) are resin particles crosslinked in the presence of a polyfunctional compound additionally.

6. The resin powder according to claim 1 or 2, wherein a proportion of the polyhydroxyalkanoate resin in the crosslinked resin particles (B) is 80 wt% or more.

7. The resin powder according to claim 1 or 2, wherein the thermoplastic resin (A) comprises a biodegradable resin.

8. The resin powder according to claim 7, wherein the biodegradable resin is a polyester resin.

9. A method for producing the resin powder according to claim 1 or 2, the method comprising:

   a step of preparing an aqueous dispersion comprising a thermoplastic resin (A) and crosslinked resin particles (B); and
   a step of spray drying the aqueous dispersion.

## INTERNATIONAL SEARCH REPORT

| International application No. |
|---|
| **PCT/JP2024/011088** |

**A. CLASSIFICATION OF SUBJECT MATTER**

***C08J 3/12***(2006.01)i
FI: C08J3/12 101; C08J3/12 CFD

According to International Patent Classification (IPC) or to both national classification and IPC

**B. FIELDS SEARCHED**

Minimum documentation searched (classification system followed by classification symbols)

B01J2/00; C08J3/00-3/28; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/014408 A1 (KANEKA CORP.) 20 January 2022 (2022-01-20)<br>entire text | 1-9 |
| A | JP 2021-88662 A (KANEKA CORP.) 10 June 2021 (2021-06-10)<br>entire text | 1-9 |
| A | JP 2021-195470 A (KANEKA CORP.) 27 December 2021 (2021-12-27)<br>entire text | 1-9 |
| A | JP 2003-175092 A (CANON KABUSHIKI KAISHA) 24 June 2003 (2003-06-24)<br>entire text | 1-9 |
| A | JP 2015-1590 A (KONICA MINOLTA, INC.) 05 January 2015 (2015-01-05)<br>entire text | 1-9 |
| A | CN 101870805 A (SHENZHEN ECOMANN BIOTECHNOLOGY CO., LTD.) 27 October 2010 (2010-10-27)<br>entire text | 1-9 |

☑ Further documents are listed in the continuation of Box C.      ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/011088**

## C.  DOCUMENTS CONSIDERED TO BE RELEVANT

| Category* | Citation of document, with indication, where appropriate, of the relevant passages | Relevant to claim No. |
|---|---|---|
| P, A | WO 2023/190185 A1 (KANEKA CORP.) 05 October 2023 (2023-10-05) <br> entire text | 1-9 |
| E, A | WO 2024/090484 A1 (KANEKA CORP.) 02 May 2024 (2024-05-02) <br> entire text | 1–9 |

Form PCT/ISA/210 (second sheet) (July 2022)

**INTERNATIONAL SEARCH REPORT**
Information on patent family members

International application No.

**PCT/JP2024/011088**

| Patent document cited in search report | | | Publication date (day/month/year) | Patent family member(s) | | | Publication date (day/month/year) |
|---|---|---|---|---|---|---|---|
| WO | 2022/014408 | A1 | 20 January 2022 | US | 2023/0323114 | A1 | |
| | | | | entire text | | | |
| | | | | EP | 4183828 | A1 | |
| | | | | CN | 115803381 | A | |
| JP | 2021-88662 | A | 10 June 2021 | (Family: none) | | | |
| JP | 2021-195470 | A | 27 December 2021 | (Family: none) | | | |
| JP | 2003-175092 | A | 24 June 2003 | US | 2003/0194443 | A1 | |
| | | | | entire text | | | |
| | | | | EP | 1275378 | A2 | |
| | | | | KR | 10-2003-0007089 | A | |
| | | | | CN | 1431041 | A | |
| JP | 2015-1590 | A | 05 January 2015 | (Family: none) | | | |
| CN | 101870805 | A | 27 October 2010 | (Family: none) | | | |
| WO | 2023/190185 | A1 | 05 October 2023 | (Family: none) | | | |
| WO | 2024/090484 | A1 | 02 May 2024 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009056770 A
- JP 2003082191 A
- WO 2019022008 A
- WO 2014020838 A
- WO 2007049694 A
- WO 2019146555 A
- JP 9078494 A
- JP H1192712 A
- JP 2001354841 A

**Non-patent literature cited in the description**

- **T. FUKUI ; Y. DOI**. *J. Bacteriol.*, 1997, vol. 179, 4821-4830